# EUROPÄISCHE PATENTSCHRIFT

(11) **EP 0 634 082 B1**
(45) Veröffentlichungstag und Bekanntmachung des Hinweises auf die Patenterteilung: **25.09.1996**
(21) Anmeldenummer: 93911424.5
(22) Anmeldetag: 25.03.1993
(51) Int. Cl.: H04Q 3/72, H04M 1/57

(54) **VERFAHREN ZUR RUFNUMMERNSIGNALISIERUNG IN EINEM FERNMELDENETZ**
PROCESS FOR SIGNALLING THE CALL NUMBER IN A TELECOMMUNICATION NETWORK
PROCEDE DE SIGNALISATION DE NUMEROS D'APPEL DANS UN RESEAU DE TELECOMMUNICATION

(30) Priorität: 30.03.1992 DE 4210401
(43) Veröffentlichungstag der Anmeldung: 18.01.1995
(73) Patentinhaber: SIEMENS AKTIENGESELLSCHAFT, 80333 München (DE)
(72) Erfinder: WILLE, Klaus, D-81679 München (DE); MARTIN, Karl-Heinz, D-81375 München (DE); KOFLER, Christian, D-81369 München (DE)
(86) Internationale Anmeldenummer: DE9300281
(87) Internationale Veröffentlichungsnummer: WO9320663

(56) Entgegenhaltungen:
- PATENT ABSTRACTS OF JAPAN vol. 6, no. 230 (E-142)16. November 1982 & JP-A-57 132 467 ( NIPPON DENKI K.K. ) 16 November 1982
- CONFERENCE RECORD, IEEE GLOBAL TELECOMMUNICATIONS CONFERENCE, 2-5 DEZ. 1985, BAND 3 SEITEN 1429-1433, NEW ORLEANS US N. SHIGEMATSU ET AL 'The Advanced Network Service System'
- NTZ NACHRICHTENTECHNISCHE ZEITSCHRIFT Bd. 28, Nr. 7, Juli 1975, BERLIN DE
- Seiten 236 - 238 R.P. LORETAN 'Flexible Numbering of Telephones over whole Area with Dispersed Translators'
- GROUP DES INGENIEURS DU SECTEUR COMMUTATION DU CNET, BAND 2 "ELECTRONIC SWITCHING", 1983, TEIL 1 KAPITEL 2, ELSEVIER SCIENCE PUBLISHERS, AMSTERDAM NL Seiten 16 - 50 'The Telephone Network'
- BRITISH TELECOMMUNICATIONS ENGINEERING Bd. 8, Januar 1990, LONDON GB Seiten 225 - 231 N.A.C. MCLEOD 'Numbering in Telecommunications'

## Beschreibung

In Fernmeldenetzen bestehen zur Numerierung, das heißt zur Kennzeichnung von Teilnehmeranschlüssen, Vermittlungsstellen oder Netzbereichen, zwei Verfahren: die verdeckte und die offene Numerierung. Bei der verdeckten Numerierung wird die Kennzahl der Vermittlungsstellen mit der Ordnungsnummer der zugehörigen Teilnehmeranschlüsse zusammengefaßt, das heißt die Kennzahl der Vermittlungsstelle ist fester Bestandteil der Teilnehmerrufnummer, sie ist verdeckt darin enthalten. Bei der offenen Numerierung sind die Numerierungsbereiche des Netzes durch eine Ziffernfolge gekennzeichnet, die beim Verbindungsaufbau zwischen den Netzbereichen zusätzlich zu den Teilnehmerrufnummern zu wählen ist (Bergmann, Lehrbuch der Fernmeldetechnik, Band 1, 5. Auflage , Berlin 1986, Seite 206).

In privaten und in öffentlichen ISDN-Netzen wird beim Verbindungsaufbau die Rufnummer des rufenden (A-) Teilnehmers zum gerufenen (B-) Teilnehmer signalisiert. Die Rufnummer des A-Teilnehmers wird zur Realisierung verschiedener Leistungsmerkmale benötigt, so unter anderem zur Rufnummernanzeige auf einem Display der empfangsseitigen (B-) Endeinrichtung, zum Rückruf im Freifall und zur Wahlwiederholung durch den B-Teilnehmer. In Netzen offener Numerierung ist beim Aufbau einer Fernmeldeverbindung, die von einem Ursprungsknoten, über Transitknoten zu einem Zielknoten geführt wird, die A-Rufnummer um die Kennzahl des Ursprungsknotens zu ergänzen. Diese Ergänzung ist beispielsweise erforderlich, damit auf dem Display der B-Endeinrichtung sämtliche Wählziffern angezeigt werden, die in die B-Endeinrichtung einzugeben sind, um die A-Endeinrichtung zu erreichen.

Wird die Fernmeldeverbindung von dem Ursprungsknoten über eine Mehrzahl von Transitknoten des Netzes zu der empfangsseitigen Fernmeldeendeinrichtung aufgebaut, so wird die Signalisierungsinformation der aufzubauenden Verbindung in jedem am Verbindungsaufbau beteiligten Knoten um eine knotenindividuelle Kennzahl ergänzt. Die Rufnummerninformation kann dabei in Abhängigkeit von der Anzahl der am Verbindungsaufbau beteiligten Knoten und in Abhängigkeit von der Ziffernanzahl der knotenindividuellen Kennzahlen neben dem endeinrichtungsindividuellen Rufnummernteil eine Vielzahl von Ziffern umfassen. Die Anzeige einer derart ergänzten Rufnummer setzt eine entsprechende Dimensionierung von Speichern voraus, auf die die entsprechende Display-Steuerung zuzugreifen hat.

Dabei ist zu berücksichtigen, daß beispielsweise für die Realisierung der Leistungsmerkmale "Rückruf im Freifall" und "Wahlwiederholung durch B-Teilnehmer" die Verwendung der um die Kennzahlen der am ursprünglichen Verbindungsaufbau beteiligten Knoten ergänzten Kennzahlen dazu führen würde, die folgende Verbindung über die Knoten zu führen, über die die ursprüngliche Verbindung geführt wurde. Dies wäre jedoch nur dann angemessen, wenn zum Zeitpunkt, zu dem die Folgeverbindung aufgebaut wird, das Netz keine verkehrsgünstigere Wegführung ermöglichen würde als zu dem Zeitpunkt, zu dem die ursprüngliche Verbindung aufgebaut wurde. Die dargestellten Probleme beim Stand der Technik wären zu vermeiden, wenn von dem Ursprungsknoten zu dem Zielknoten eine Leitung eingerichtet würde und die Verbindung über diese Leitung aufgebaut würde. Dies würde allerdings einen erheblichen Aufwand erfordern, insbesondere auch dann, wenn Ursprungs- und Zielknoten örtlich weit voneinander entfernt sind. Diese Möglichkeit scheidet praktisch dann aus, wenn Ursprungs- und Zielknoten in unterschiedlichen Kontinenten (Europa/USA) angeordnet sind.

Aus den Produktschriften der Fa. Siemens "Hicom 300 System Produkt Data", Ordering No. A19100-K3161-430-X-7600, Seiten 55/56 und "Private Kommunikationssysteme, Hicom schafft Verbindungen", Bestell-Nr. A19100-K3160-A302, Seite "Hicom 300 Networking" ist bereits ein Kommunikationssystem ("Hicom 300") bekannt, das einen Netzknoten bilden kann. In einem derartigen Netz werden zu aufzubauenden Fernmeldeverbindungen Signalisierungsinformationen gebildet, in die eine den Ursprungsknoten bezeichnende Knotennummer und die Rufnummer der sendeseitigen Fernmeldeendeinrichtung um Kennzahlen von am Verbindungsaufbau beteiligter Knoten ergänzt wird, so daß sich die vorstehend beschriebenen Nachteile ergeben.

Der Erfindung liegt die Aufgabe zugrunde, ein Verfahren zur Rufnummernsignalisierung anzugeben, das eine für eine empfangsseitige Fernmeldeendeinrichtung vereinfachte Auswertung ermöglicht.

Die Lösung dieser Aufgabe erfolgt erfindungsgemäß mit den Merkmalen des Patentanspruchs 1.

Ein Vorteil der erfindungsgemäßen Lösung ist zunächst darin zu sehen, daß die Hardware-Konfiguration des Netzes nicht zu verändern ist. Insbesondere ist zwischen Ursprungs- und Zielknoten keine Leitung bzw. kein Leitungsbündel zu installieren. Ein weiterer Vorteil der erfindungsgemäßen Lösung ist darin zu sehen, daß die in die Rufnummernsignalisierung eingebundenen Displaysteuerungen bzw. das ihnen zugeordnete Steuerungsprogramm und die die anzuzeigenden Informationen aufzunehmenden Speichereinrichtungen unverändert übernommen werden können.

Weitere vorteilhafte Ausführungsformen der Erfindung sind in den Unteransprüchen gekennzeichnet.

Es zeigt
Figur 1 ein Netz, in dem die erfindungsgemäße Rufnummernsignalisierung erfolgt,
Figur 2 ein Blockschaltbild eines Knotens in einem Netz nach Figur 1, und
Figur 3 Tabellen, die Knoten in dem Netz nach Figur 1 zugeordnet sind, und
Figur 4 die Struktur der von den Knoten nach den Figuren 1 und 2 gebildeten Signalisierungsinformationen.

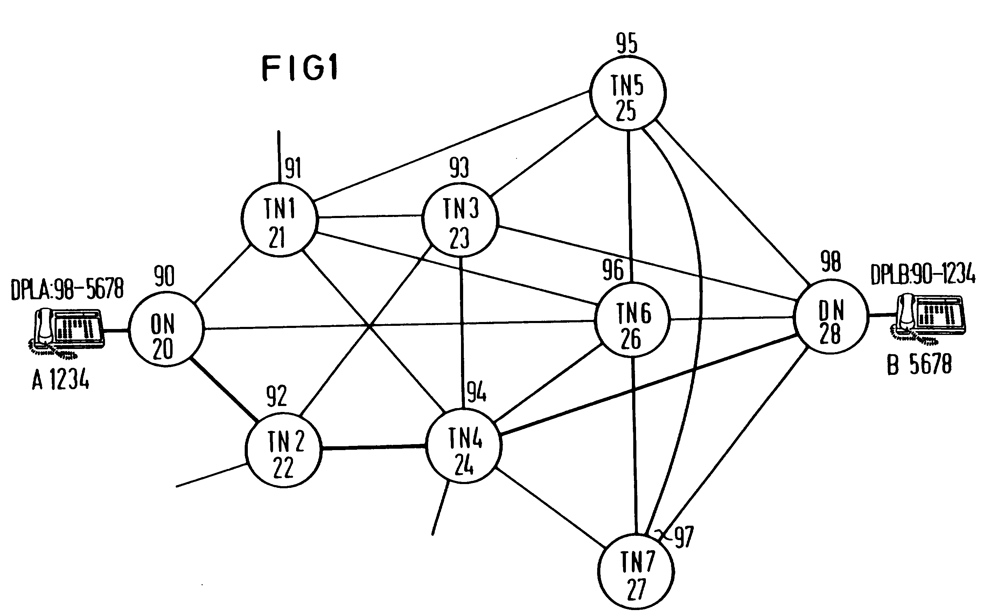

In Figur 1 ist ein vermaschtes Netz mit mehreren Knoten, mit einer sendeseitigen Fernmeldeeinrichtung (A) (.z.B. ein Fernsprechendgerät oder ein Faxendgerät), und mit einer empfangsseitigen Fernmeldeeinrichtung (B) dargestellt. Hinsichtlich einer Fernmeldeverbindung, die von A nach B aufzubauen ist, haben die Netzknoten die Funktion eines Ursprungsknotens ON (Origin Node), von Durchgangs- oder Transitknoten TNx (Transition Node) und eines Zielknotens DN (Destination Node). Das Netz umfaßt beispielsweise 7 Transitknoten TN1...TN7, die wie in der Figur 1 angegeben, miteinander verbunden sind. Damit läßt sich eine Fernmeldeverbindung zwischen A und B auf verschiedenen Wegen herstellen: beispielsweise auf dem Weg ON-TN6-DN, ON-TN2-TN4-DN, und ON-TN2-TN3-TN5-TN7-TN6-DN.

Den Knoten ON, TN1, ... TN7, DN sind individuelle Knotennummern 20, ... 28 und individuelle Kennzahlen 90, ... 98 zugeordnet. In Figur 1 sind die Knotennummern in den die Knoten symbolisch darstellenden Kreisen unterhalb der Knotennamen ON, TN1, ... TN7, DN und die Kennzahlen oberhalb dieser Kreise angegeben. Der Begriff der "Knotennummer" bezeichnet ein netzweit festgelegtes betriebstechnisches Datum. Während die Ursprungsknotennummer im knotenübergreifenden Verkehr übertragen wird, werden die Knotennummern der übrigen, am Verbindungsaufbau beteiligten Knoten nicht übertragen. Diese Knotennummern können im Zusammenhang mit dem erfindungsgemäßen Verfahren für noch zu beschreibende knoteninterne Prüfungen verwendet werden. Der Begriff der "Kennzahl" bezeichnet demgegenüber eine Wählziffer bzw. eine Wählziffernkombination, die im knotenübergreifenden Verkehr mit offener Signalisierung zu wählen ist und der eigentlichen Endeinrichtungsrufnummer vorangestellt ist. Die beim erfindungsgemäßen Verfahren vorgenommenen Prüfungen können je nach verwendetem Netzprotokoll und in Abhängigkeit der den Netzknotensteuerungen zugeordneten Steuerungsprogrammen anhand der Knotennummern und/oder anhand der Kennzahlen vorgenommen werden.

Es wird nun davon ausgegangen, daß eine Fernmeldeverbindung von A über die Knoten ON (20), TN2 (22), TN4 (24), DN (28) zu B aufgebaut wird. Die Rufnummer von A sei 1234 und die Rufnummer von B sei 5678; der Zielknoten DN habe die Knotenkennzahl 98. Die übrigen am Verbindungsaufbau beteiligten Knoten ON, TN2, TN4, DN haben die Knotenkennzahlen 90, 92, 94 und 98. Zur Anwahl von B werden in die Endeinrichtung A die Wählziffern 98 5678 eingegeben. In die Signalisierungsinformation der aufzubauenden Fernmeldeverbindung wird in an sich bekannter Weise neben der A-Rufnummer (1234), die Ursprungsknotennummer (20) und die gewählte B-Rufnummer einschließlich der (Ziel-)Knotenkennzahl (98 5678) eingefügt.

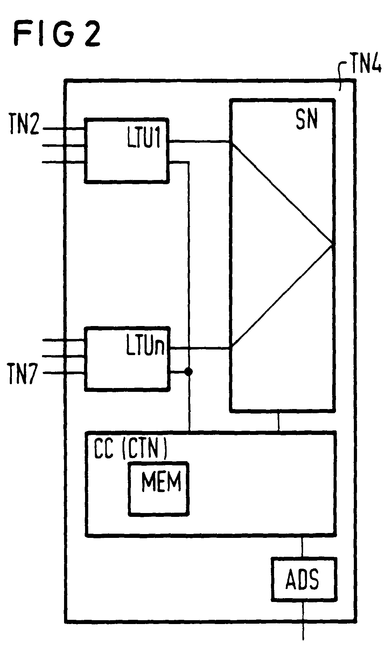

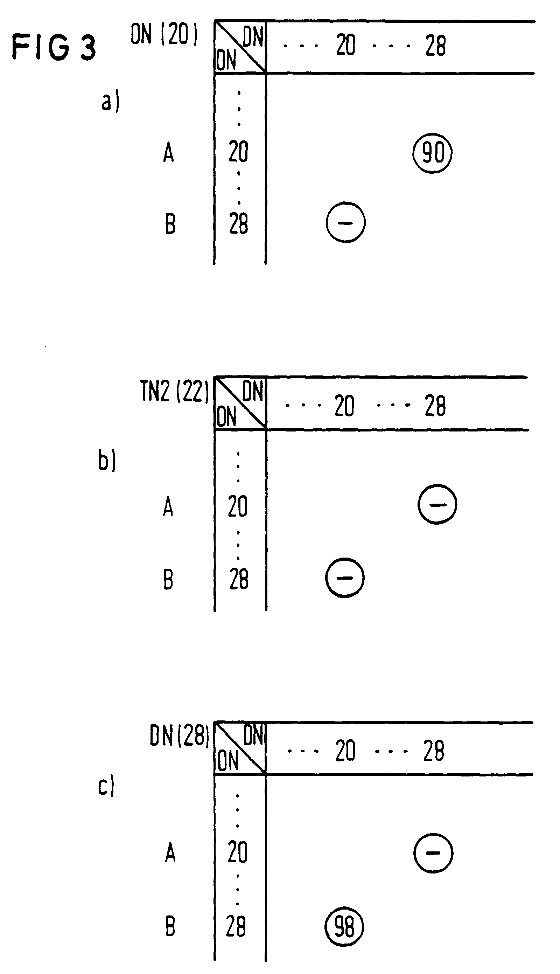

In jedem am Verbindungsaufbau beteiligten Knoten wird nun geprüft, ob und gegebenenfalls in welcher Weise die A-Rufnummer (1234) zu modifizieren ist. Diese Prüfung erfolgt anhand der Ursprungsknotennummer (20) sowie anhand der (Ziel-)Knotenkennzahl (Richtungskennzahl, 98). In den Netzknoten ist die Zuordnung von (Ziel-)Knotenkennzahlen und Zielknotennummern abgespeichert. Der erste am Verbindungsaufbau beteiligte Netzknoten ist der Ursprungsknoten (ON). Die Steuerung des Ursprungsknotens (CTN, vgl. Figur 2) bildet zunächst aus der (Ziel-)Knotenkennzahl (98) die Zielknotennummer (28) und greift dann auf eine im Knoten abgespeicherte Rufnummer-Modifikationstabelle (Figur 3a) zu. Diese Tabelle gibt in Abhängigkeit der Zielknotennummer (hier 28) an, ob und gegebenenfalls in welcher Weise die A-Rufnummer (vgl. Anspruch 1) bzw. die B-Rufnummer (Ursprungsknotennummer 28 und Zielknotennummer 20, vgl. Anspruch 2) zu modifizieren ist. Im vorliegenden Fall ergibt die für die A-Rufnummer vorgenommene Prüfung, daß die A-Rufnummer um die (Ursprungs-) Knotenkennzahl "90" zu ergänzen ist (Figur 3a: Zeile "20", Spalte "28"). Diese Ergänzung wird von der Steuerung CTN des Ursprungsknotens realisiert, so daß in die Signalisierungsinformation der aufzubauenden Fernmeldeverbindung zusätzlich zur A-Rufnummer 1234 die Knotenkennzahl 90 eingefügt wird.

Die Fernmeldeverbindung wird nun vom Ursprungsknoten "20" zum Transitknoten "22" geführt. Die Steuerung dieses Knotens (CTN, vgl. Figur 2) bildet wie schon die Steuerung des Ursprungsknotens aus der (Ziel-)Knotenkennzahl (98) die Zielknotennummer (28) und greift auf die im Knoten abgespeicherte Rufnummer-Modifikationstabelle (Figur 3b) zu. Im vorliegenden Fall ergibt die für die A-Rufnummer vorgenommene Prüfung, daß die A-Rufnummer nicht um die (TN2-) Knotenkennzahl "92" zu ergänzen ist (Figur 3b: Zeile "22", Spalte "28"). Die Signalisierungsinformation erfährt also keine Modifikation; die A-Rufnummer 1234 bleibt lediglich um die Ursprungsknotenkennzahl 90 ergänzt.

In den übrigen am Verbindungsaufbau beteiligten Knoten TN4 und DN führt die jeweilige Knotensteuerung CTN (vgl. Figur 2) die entsprechenden Prüfungen mit dem Ergebnis durch, das sich im Transitknoten TN2 ergeben hat: Die in der Signalisierungsinformation enthaltene A-Rufnummer wird nicht durch die jeweilige Knotenkennzahl "94" bzw. "98" ergänzt. Der empfangsseitigen Fernmeldeendeinrichtung B wird also die nur um die Ursprungsknotenkennzahl "90" ergänzte A-Rufnummer 1234 zugeführt, wo sie zur Anzeige auf einem Display DPLB bzw. für die Realisierung anderer Leistungsmerkmale zur Verfügung steht. Die A-Rufnummer wird also der empfangsseitigen Endeinrichtung unabhängig von dem tatsächlich zurückgelegten Weg zur Verfügung gestellt.

Die Rücksignalisierung der B-Rufnummer von der Endeinrichtung B zur Endeinrichtung A erfolgt in analoger Weise, wobei zu beachten ist, daß der "Zielknoten" (28) des Verbindungsaufbaus gleich dem "Ursprungsknoten" (28) der Rücksignalisierung ist und daß der "Ursprungsknoten" (20) des Verbindungsaufbaus gleich dem Zielknoten "20" der Rücksignalisierung ist. Die Rücksignalisierung erfolgt über die am Verbindungsaufbau beteiligten Knoten (20-22-24-28), allerdings in umgekehrter Reihenfolge (28-24-22-20). Die Steuerung der an der Rücksignalisierung beteiligten Knoten führen die im Zusammenhang mit dem Verbindungsaufbau beschriebenen Prüfungen durch und greifen jeweils auf die in den Knoten abgespeicherten Rufnummer-Modifikationstabellen zu (Figuren 3c, 3b und 3a: Zeile "28", Spalte "20"). Damit ergibt sich, daß die in der (Rück-)Signalisierungsinformation enthaltene B-Rufnummer nur im Knoten "28" um die Knotenkennzahl "98" ergänzt wird. Der sendeseitigen Fernmeldeendeinrichtung A wird also die nur um die Knotenkennzahl "98" ergänzte B-Rufnummer 5678 zugeführt, wo sie zur Anzeige auf einem Display DPLA bzw. für die Realisierung anderer Leistungsmerkmale zur Verfügung steht. Die B-Rufnummer wird also der sendeseitigen Endeinrichtung unabhängig von dem tatsächlich zurückgelegten Weg zur Verfügung gestellt.

Bei den Knoten handelt es sich insbesondere um Kommunikationssysteme, die in den veröffentlichten europäischen Patentanmeldungen EP 0306693 A1 (US-PS 4,903,258), EP 0303870 A2 (US-PS 5,018,097) und EP 0303869 A1 (US-PS 5,047,923) offenbart sind. In Figur 2 sind lediglich die für das Verständnis der Erfindung erforderlichen Komponenten des Kommunikationssystems dargestellt: Dieses umfaßt eine Steuerung CC (CTN), ein Koppelnetz SN sowie Anschlußeinheiten LTU1 ... LTUn. Diese Anschlußeinheiten umfassen Teilnehmeranschlußschaltungen und Leitungssatzschaltungen. Die Teilnehmeranschlußschaltungen sind teilnehmerorientierte Geräteanschlüsse wie beispielsweise ISDN-Basisanschlüsse für digitale mono- und multifunktionale Endgeräte. Die Leitungssatzschaltungen dienen zur Verbindung mit öffentlichen und/oder privaten Netzen und sind beispielsweise ISDN-Basisanschlüsse für ISDN-Amtsverkehr und ISDN-Querverkehr.

Die Teilnehmeranschluß- und Leitungssatzschaltungen haben die gleichen systeminternen Schnittstellen. Sie koppeln die einzelnen Basiskanäle, auf denen Nutzdaten, d.h. Sprach- und/oder Dateninformationen übertragen werden, an eine beliebige Auswahl aus zwei Multiplexkanälen mit beispielsweise 32 Kanälen des Koppelnetzes SN und übergeben die in einen Steuerkanal übertragenen Signalisierungsinformationen als HDLC-Protokoll an die Steuerung CC (CTN). Dieser Steuerung ist ein Speicher MEM zugeordnet, in dem die der Figur 3 angegebenen Tabelleninformationen abgespeichert sind. Die Tabelleninformationen sind insbesondere über betriebstechnische Befehle, die in eine betriebstechnische Einheit ADS einzugeben sind, konfigurierbar. Das in Figur 2 dargestellte Kommunikationssystem, das beispielsweise den Knoten TN4 bildet, stellt u.a. Verbindungen zu benachbarten Knoten, beispielsweise zu den Knoten TN2 und TN7, her.

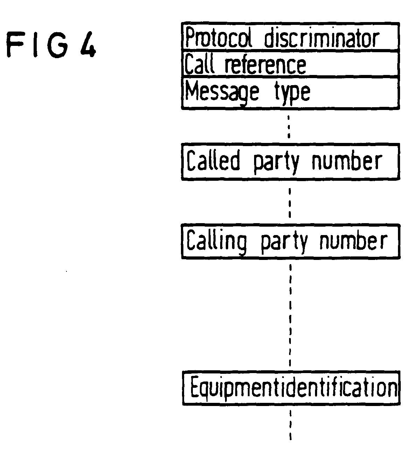

Das in Figur 1 dargestellte vermaschte Netz kann beispielsweise ein Netz sein, für das das bekannte CorNet-Protokoll implementiert ist (Siemens Aktiengesellschaft Private Communication Systems and Networks Division: "CorNet Signalling for ISDN Communication in Corporate Networks", Ordering No. A19100-K 3110-G284-X-7600, Berlin and Munich 1987; "CorNet functional specification"). Die Verbindungsaufbaunachricht ("Setup message") kann dabei wie in Figur 4 strukturiert sein. Diese Nachricht besteht dabei aus den folgenden Informationselementen: Protocoll discriminator, Call reference, Message type, ... Called party number, ... Calling party number, ... Equipment identification ...

Das Informationselement "Protocol discriminator" gibt den Protokolltyp, z.B. CorNetN, an; "Call reference" bezeichnet eine laufende Prozeßnummer und "message type" bezeichnet die Art der Signalisierungsnachricht, hier: "Verbindungsaufbau" (Setup).

Die "called party number" (B-Rufnummer) enthält neben der eigentlichen Rufnummer die Kennzahl z.B. 98, die dem Zielknoten DN (28) zugeordnet ist.

Das Informationselement "Calling party number" bezeichnet die A-Rufnummer, die bei Rufnummernsignalisierung in offener Numerierung um die dem Ursprungsknoten zugeordnete Kennzahl ergänzt ist. Sofern bei dem erfindungsgemäßen Verfahren in der Signalisierungsinformation nicht die Ursprungsknotennummer enthalten ist bzw. von einer Netzknotensteuerung nicht ausgewertet werden kann, wertet diese bei der Auswertung der Tabellen nach Figur 3 die Ursprungsknotenkennzahl in die Ursprungsknotennummer um.

Das Informationselement "equipment identification" bezeichnet die Knotennummer (z.B. 20) des Ursprungsknotens. Ferner kann noch ein Informationselement "Connected party number vorgesehen sein. Dies wird in die Rückmeldung ("Alert", "zweite Signalisierungsinformation") eingefügt, wenn die Verbindung zu B bzw. (z.B. im Fall der Anrufumleitung) zu einer anderen empfangsseitigen Endeinrichtung aufgebaut worden ist. Dieses Informationselement bezeichnet dann die Rufnummer von B bzw. die Rufnummer der anderen Endeinrichtung.

## Patentansprüche

1. Verfahren zur Rufnummernsignalisierung in einem Fernmeldenetz, wobei Fernmeldeverbindungen von einer sendeseitigen Fernmeldeendeinrichtung (A) über einen Ursprungsknoten (ON), über Transitknoten (TN1, ... TN7) zu einer empfangsseitigen Fernmeldeendeinrichtung (B) gelenkt werden, wobei in eine erste Signalisierungsinformation der aufzubauenden Fernmeldeverbindung eine den Ursprungsknoten (ON) bezeichnende Knotennummer, die Rufnummer der sendeseitigen Fernmeldeendeinrichtung (A) und eine der empfangsseitigen Fernmeldeendeinrichtung (B) zugeordnete, in die sendeseitige Fernmeldeendeinrichtung (A) eingegebene Knotenkennzahl und die (B-) Rufnummer eingefügt werden,
**dadurch gekennzeichnet,**
daß in den am Verbindungsaufbau beteiligten Knoten (ON, TN1, ... DN) anhand der Knotennummer des Ursprungsknotens und anhand der Kennzahl (KDN) der empfangsseitigen Fernmeldeendeinrichtung (B) geprüft wird, ob die Rufnummer der sendeseitigen Fernmeldeendeinrichtung (A) um die Kennzahl des jeweiligen Knotens (ON, TN1, ... DN) zu ergänzen ist, daß die Rufnummer der sendeseitigen Fernmeldeendeinrichtung (A) im Ursprungsknoten (ON) um die den Ursprungsknoten (ON) bezeichnende Kennzahl (KON) ergänzt und in den dem Ursprungsknoten (ON) nachgeordneten Knoten (TN1, ... DN) nicht um die diese Knoten (TN1, ... DN) bezeichnende Kennzahlen (KTN1, ... KDN) ergänzt wird.

2. Verfahren nach Anspruch 1,
**dadurch gekennzeichnet,**
daß nach dem Aufbau der Fernmeldeverbindung von der sendeseitigen Fernmeldeendeinrichtung (A) zur empfangsseitigen Fernmeldeendeinrichtung (B) eine zweite Signalisierungsinformation gebildet wird, die von der empfangsseitigen zur sendeseitigen Fernmeldeendeinrichtung (B, A) mit der Rufnummer der empfangsseitigen Fernmeldeendeinrichtung (B) übertragen wird, daß in den am Verbindungsaufbau beteiligten Knoten (DN, TN7, ... ON) anhand der Kennzahl (KDN) des Zielknotens (DN) und anhand der Knotennummer des Ursprungsknotens (ON) geprüft wird, ob die Rufnummer der empfangsseitigen Fernmeldeendeinrichtung (B) um die Kennzahl (KDN, KTN7, ..., KON) des jeweiligen Knotens (DN, TN7, ... ON) zu ergänzen ist, daß die Rufnummer der empfangsseitigen Fernmeldeendeinrichtung (B) in dem den für die zweite Signalisierungsinformation darstellenden Ursprungsknoten (DN) um die diesen Knoten (DN) bezeichnende Kennzahl (KDN) ergänzt und in den diesem Knoten (DN) bezüglich der zweiten Signalisierungsinformation nachgeordneten Knoten (TN7, ... ON) nicht um die diese Knoten (TN7, ... ON) bezeichnende Kennzahlen (KTN7, ... KON) ergänzt wird.

## Claims

1. Process for signalling the call number in a telecommunication network, telecommunication connections being routed from telecommunication terminal equipment on the transmission side (A) via an origin node (ON), via transit nodes (TN1, ... TN7) to telecommunication terminal equipment on the reception side (B), there being inserted into first signalling information of the telecommunication connection to be set up a node number designating the origin node (ON), the call number of the telecommunication terminal equipment on the transmission side (A), a node identity number, assigned to the telecommunication terminal equipment on the reception side (B) and entered into the telecommunication terminal equipment on the transmission side (A), and the (B) call number, characterized in that in the nodes (ON, TN1, ... DN) involved in the setup of the connection it is checked on the basis of the node number of the origin node and on the basis of the identity number (KDN) of the telecommunication terminal equipment on the reception side (B) whether the call number of the telecommunication terminal equipment on the transmission side (A) is to be supplemented by the identity number of the respective node (ON, TN1, ... DN), and in that the call number of the telecommunication terminal equipment on the transmission side (A) is supplemented in the origin node (ON) by the identity number (KON) designating the origin node (ON) and is not supplemented in the nodes (TN1, ... DN) following the origin node (ON) by the identity numbers (KTN1, ... KDN) designating these nodes (TN1, ... DN).

2. Process according to Claim 1, characterized in that, after the setup of the telecommunication connection from the telecommunication terminal equipment on the transmission side (A) to the telecommunication terminal equipment on the reception side (B), second signalling information is formed, which is transmitted from the telecommunication terminal equipment on the reception side (B) to that on the transmission side (A) with the call number of the telecommunication terminal equipment on the reception side (B), in that in the nodes (DN, TN7, ... ON) involved in the setup of the connection it is checked on the basis of the identity number (KDN) of the destination node (DN) and on the basis of the node number of the origin node (ON) whether the call number of the telecommunication terminal equipment on the reception side (B) is to be supplemented by the identity number (KDN, KTN7 ... KON) of the respective node (DN, TN7, ... ON), and in that the call number of the telecommunication terminal equipment on the reception side (B) is supplemented in the origin node (DN), representing the second signalling information, by the identity number (KDN) designating this node (DN) and is not supplemented in the nodes (TN7, ... ON) following this node (DN) with respect to the second signalling information by the identity numbers (KTN7, ... KON) designating these nodes (TN7, ...ON).

## Revendications

1. Procédé de signalisation de numéros d'appel dans un réseau de télécommunication, dans lequel on achemine des liaisons de télécommunication en provenance d'un terminal (A) de télécommunication émetteur, par l'intermédiaire d'un noeud (ON) d'origine, de noeuds (TN1 à TN7) de transit, à destination d'un terminal (B) de télécommunication récepteur, un numéro de noeud désignant le noeud (ON) d'origine, le numéro d'appel du terminal (A) de télécommunication émetteur, un nombre caractéristique de noeuds, associé au terminal (B) de télécommunication récepteur et introduit dans le terminal (A) de télécommunication émetteur, et le numéro d'appel (B-) étant insérés dans une première information de signalisation de la liaison de télécommunication à établir,
caractérisé en ce que
on vérifie dans les noeuds (ON, TN1 à DN) participant à l'établissement de la liaison, sur la base du numéro du noeud d'origine et sur la base du nombre caractéristique (KDN) du terminal (B) de télécommunication récepteur, si le numéro d'appel du terminal (A) de télécommunication émetteur doit être complété par le nombre caractéristique du noeud considéré (ON, TN1 à DN), on complète le numéro d'appel du terminal (A) de télécommunication émetteur dans le noeud (ON) d'origine par le nombre caractéristique (KON) désignant le noeud (ON) d'origine et on ne complète pas, dans les noeuds (TN1 à DN) en aval du noeud (ON) d'origine, le numéro d'appel du terminal (A) de télécommunication émetteur, par les nombres caractéristiques (KTN1 à KDN) désignant ces noeuds (TN1 à DN).

2. Procédé suivant la revendication 1,
caractérisé en ce que
on forme, après l'établissement de la liaison de télécommunication en provenance du terminal (A) de télécommunication émetteur à destination du terminal (B) de télécommunication récepteur, une seconde information de signalisation, que l'on transmet du terminal de télécommunication récepteur (B) au terminal de télécommunication émetteur (A), avec le numéro d'appel du terminal (B) de télécommunication récepteur, on vérifie dans les noeuds (DN, TN7 à ON) participant à l'établissement de la liaison, sur la base du nombre caractéristique (KDN) du noeud (DN) de destination et sur la base du numéro du noeud (ON) d'origine, si le numéro d'appel du terminal (B) de télécommunication récepteur doit être complété par le nombre caractéristique (KDN, KTN7 à KON) du noeud considéré (DN, TN7 à ON), on complète le numéro d'appel du terminal (B) de télécommunication récepteur, dans le noeud (DN) d'origine représentant la seconde information de signalisation, par le nombre caractéristique (KDN) désignant ce noeud (DN) et on ne complète pas le numéro d'appel du terminal (B) de télécommunication récepteur, dans les noeuds (TN7 à ON) en aval de ce noeud (DN) du point de vue de la seconde information de signalisation, par les nombres caractéristiques (KTN7 à KON) désignant ces noeuds (TN7 à ON).
